# EUROPÄISCHE PATENTSCHRIFT

(11) **EP 2 701 997 B1**
(45) Veröffentlichungstag und Bekanntmachung des Hinweises auf die Patenterteilung: **17.06.2015**
(21) Anmeldenummer: 12707554.7
(22) Anmeldetag: 02.03.2012
(51) Int. Cl.: B65G 21/22

(54) **TRANSPORTSYSTEM MIT SCHLEUSENVORRICHTUNG**
TRANSPORT SYSTEM HAVING A LOCK DEVICE
SYSTÈME DE TRANSPORT À SAS

(30) Priorität: 26.04.2011 DE 102011017525
(43) Veröffentlichungstag der Anmeldung: 05.03.2014
(73) Patentinhaber: Robert Bosch GmbH, 70442 Stuttgart (DE)
(72) Erfinder: VAN DE LOECHT, Heinrich, 76461 Muggensturm (DE)
(86) Internationale Anmeldenummer: PCT/EP2012/053638
(87) Internationale Veröffentlichungsnummer: WO 2012/146424

(56) Entgegenhaltungen:
- EP-A2- 0 713 834
- CH-A1- 701 855
- CH-A5- 680 283
- DE-A1-102007 024 446
- US-A1- 2003 230 941

## Beschreibung

### Stand der Technik

Die vorliegende Erfindung betrifft ein Transportsystem zur Förderung eines Produkts zur Beschickung von Verpackungsmaschinen, insbesondere horizontalen Schlauchbeutelmaschinen oder Kartonierern mit Stückgütern.

Transportsysteme mit einer umlaufenden Transportstrecke für unabhängig voneinander angetriebene Läufer zur Produktbeschickung von Verpackungsmaschinen sind aus dem Stand der Technik in unterschiedlichen Ausgestaltungen bekannt. Zum Einbau bzw. Ausbau der Läufer muss die Transportstrecke zwischen zwei Streckenteilen in aufwändigen Demontage- und Montagevorgängen geöffnet bzw. wieder geschlossen werden. Danach ist jeweils eine erneute präzise Feinjustierung der verbundenen Streckenteile erforderlich, die sehr zeitaufwändig ist. Ferner ist aus der US 2003/0230941 A1 und der DE 10 2007 024 446 A1 ein Transportsystem gemäß dem Oberbegriff des Anspruchs 1 bekannt.

### Offenbarung der Erfindung

Das erfindungsgemäße Transportsystem mit den Merkmalen des Anspruchs 1 weist demgegenüber den Vorteil auf, dass die Transportstrecke zwischen zwei Streckenteilen auf einfache Weise geöffnet werden kann, um Läufer aus- bzw. einzubauen.

Erfindungsgemäß umfasst die Schleusenvorrichtung wenigstens ein erstes stabförmiges Führungselement und ein zweites stabförmiges Führungselement. Das erste Führungselement verbindet dabei ein erstes freies Ende des U-förmigen Kurvenabschnitts mit einem ersten benachbarten Streckenteil und das zweite Führungselement verbindet ein zweites freies Ende des U-förmigen Kurvenabschnitts mit einem zweiten benachbarten Streckenteil. Zudem ist der U-förmige Kurvenabschnitt zum Lösen von den benachbarten Streckenteilen über die stabförmigen Führungselemente teilweise abziehbar ausgebildet. Hierdurch können Läufer sehr schnell aus der Transportstrecke aus- bzw. eingebaut werden. Zudem wird ein einfacher Aufbau mit unverändertem Bauvolumen des Transportsystems erreicht. Die stabförmigen Führungselemente stellen weiterhin sicher, dass keine Nachjustierung der Streckenteile zueinander nach dem Wiederzusammenbau notwendig ist.

Besonders bevorzugt umfasst die Schleusenvorrichtung wenigstens ein Exzenterelement um eine Relativposition zwischen dem U-förmigen Kurvenabschnitt und benachbarten Streckenteilen zu verändern. Hierdurch wird eine einfache, stufenlose und reproduzierbare Positionierung der benachbarten Streckenteile ermöglicht.

Gemäß einer weiteren bevorzugten Ausführungsform der Erfindung ist ein erstes Exzenterelement am ersten stabförmigen Führungselement und ein zweites Exzenterelement am zweiten stabförmigen Führungselement angeordnet. Hierdurch wird mit einer minimalen Anzahl von Bauteilen eine kosteneffiziente, präzise Justierung der Streckenteile zueinander ermöglicht. Ferner muss die Justierung der Schleusenvorrichtung nur einmalig erfolgen und eine manuelle Feinpositionierung ist nach jeden Schließen der Schleusenvorrichtung nicht erforderlich.

Vorzugsweise ist an einem ersten freien Ende des Kurvenabschnitts das erste stabförmige Führungselement und ein drittes stabförmiges Führungselement angeordnet, wobei an jedem der stabförmigen Führungselemente ein Exzenterelement angeordnet ist, wobei die Exzenterelemente in zueinander senkrechten Richtungen angeordnet sind. Dadurch ist ohne großen Werkzeug- und Zeitaufwand eine exakte Ausrichtung des Kurvenabschnitts zum benachbarten Streckenteil in zwei senkrechten Führungsebenen bzw. Freiheitsgraden, d. h. in Längsrichtung parallel zur Bewegungsrichtung sowie senkrecht zur Bewegungsrichtung der Transportstrecke unabhängig voneinander im Millimeterbereich möglich. Ferner wird damit ein fehlertolerantes Führungssystem bereitgestellt, bei dem Fertigungstoleranzen der einzelnen Bauteile durch die Justage der Bauteile zueinander ausgeglichen werden können.

Weiterhin bevorzugt weist das stabförmige Führungselement ein senkrecht zur Längsrichtung des Führungselements durchgehendes Langloch auf, in welchem ein Exzenterelement angeordnet ist. In weiterer vorzugsweiser Ausgestaltung weist das Langloch eine Länge in Längsrichtung auf, welche größer als eine Länge des Läufers in Bewegungsrichtung ist. Hierdurch kann das Führungselement nach dem Lösen des Exzenterelements in der Bewegungsrichtung soweit herausgezogen werden, dass ein vorhandener Läufer ohne Kippen und ohne Werkzeuge manuell ausgebaut und/oder ein neuer Läufer eingebaut werden kann.

Vorzugsweise umfasst das Transportsystem ferner ein viertes stabförmiges Führungselement, wobei das vierte stabförmige Führungselement und das zweite stabförmige Führungselement an einem zweiten freien Ende des Kurvenabschnitts angeordnet sind, wobei an jedem stabförmigen Führungselement ein Exzenterelement angeordnet ist, wobei die Exzenterelemente in zueinander senkrechten Richtungen angeordnet sind. Dadurch kann gleichermaßen wie am ersten freien Ende eine exakte Ausrichtung des Kurvenabschnitts zum entsprechend anderen benachbarten Streckenteil vorgenommen und Fertigungstoleranzen der beiden Bauteile ausgeglichen werden.

Weiterhin bevorzugt ist in dem zum U-förmigen Kurvenabschnitt benachbarten Streckenteil ein Trennschlitz vorgesehen, welcher das benachbarte Streckenteil in einem ersten Teil und einen zweiten Teil unterteilt, wobei der U-förmige Kurvenabschnitt ausschließlich am ersten Teil fixiert ist. Mittels des Trennschnitzes wird der benachbarte Streckenteil biegeweich ausgebildet und kann über die beiden Exzenterelemente relativ zum U-förmigen Kurvenabschnitt quer zur Bewegungsrichtung verschoben bzw. justiert werden. Somit können Übergänge zwischen dem U-förmigen Kurvenstreckenteil und dem benachbarten Streckenteilen der Transportstrecke mit in einer Toleranz von ± 0,01 mm realisiert werden, die einen betriebssicheren Lauf der Läufer gewährleisten.

### Kurze Beschreibung der Zeichnung

Nachfolgend wird ein Ausführungsbeispiel der Erfindung unter Bezugnahme auf die begleitende Zeichnung im Detail beschrieben. In der Zeichnung ist:
- Figur 1: eine schematische perspektivische Teilansicht eines erfindungsgemäßen Transportsystems gemäß einem bevorzugten Ausführungsbeispiel der Erfindung, in geöffnetem Zustand,
- Figur 2: eine perspektivische Teilansicht des erfindungsgemäßen Transportsystems von Figur 1, in geschlossenem Zustand,
- Figur 3: eine schematische perspektivische Darstellung eines Kurvenstreckenteils samt einer integrierten Schleusenvorrichtung, und
- Figur 4: eine perspektivische Darstellung eines Führungselements der Schleusenvorrichtung von Figur 3.

### Ausführungsform der Erfindung

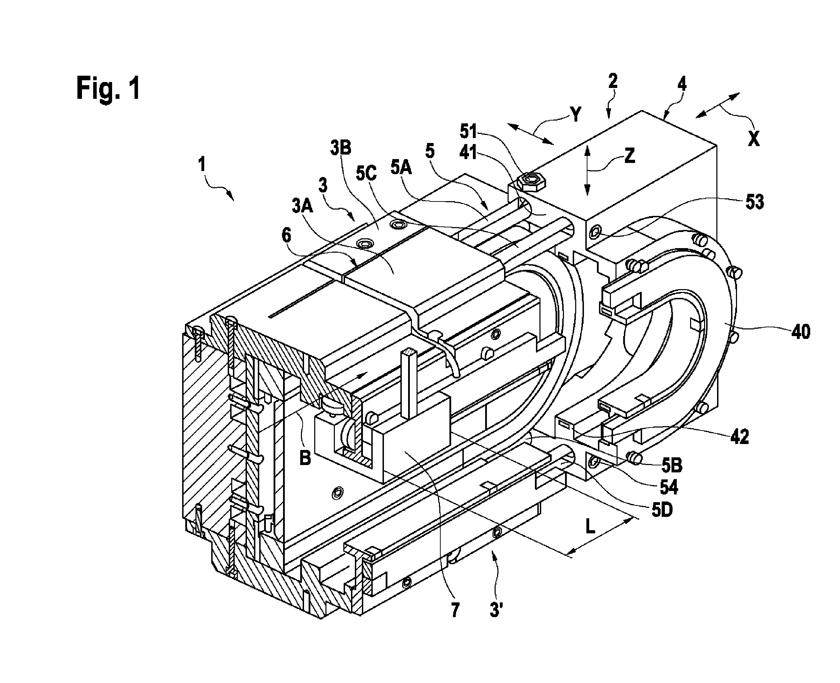

Nachfolgend wird unter Bezugnahme auf die Figuren 1 bis 4 ein Transportsystem 1 zum Transport von Gegenständen gemäß einem bevorzugten Ausführungsbeispiel der Erfindung im Detail beschrieben. Das Transportsystem 1 umfasst eine Vielzahl von Linear- und Kurvenstreckenteilen, welche zu einer beliebigen Transportstrecke 2 zusammenbaubar sind.

Wie in Figur 1 veranschaulicht, umfasst das Transportsystem 1 insbesondere zwei Linearstreckenteile 3, 3' und ein dazwischen angeordnetes Kurvenstreckenteil 4 mit einem U-förmigen Kurvenabschnitt 40, welcher eine 180°-Umlenkung der Transportstrecke 2 definiert. Ferner ist eine Schleusenvorrichtung 5 zwischen dem U-förmigen Kurvenabschnitt 40 und den jeweils benachbarten Linearstreckenteilen 3, 3' vorgesehen, mittels der die Transportstrecke 2 in Richtung eines Doppelpfeils X geöffnet bzw. geschlossen werden kann.

Wie aus Figur 1 weiter ersichtlich ist, weist die Schleusenvorrichtung 5 ein erstes stabförmiges Führungselement 5A, ein zweites stabförmiges Führungselement 5B, ein drittes stabförmiges Führungselement 5C und ein viertes stabförmiges Führungselement 5D auf. Die ersten und dritten Führungselemente 5A und 5C sind hierbei in entsprechende, hier nicht sichtbare Bohrungen des ersten Linearstreckenteils 3 spielfrei eingepresst sowie gegen axiales Verschieben gesichert und verbinden dadurch ein erstes freies Ende 41 des U-förmigen Kurvenabschnitts 40 mit dem ersten Linearstreckenteil 3. Gleichermaßen sind die zweiten und vierten Führungselemente 5B und 5D in entsprechende, hier nicht sichtbare Bohrungen des zweiten Linearstreckenteils 3' spielfrei eingepresst sowie gegen axiales Verschieben gesichert und verbinden dadurch ein zweites freies Ende 42 des U-förmigen Kurvenabschnitts 40 mit dem zweiten benachbarten Linearstreckenteil 3'.

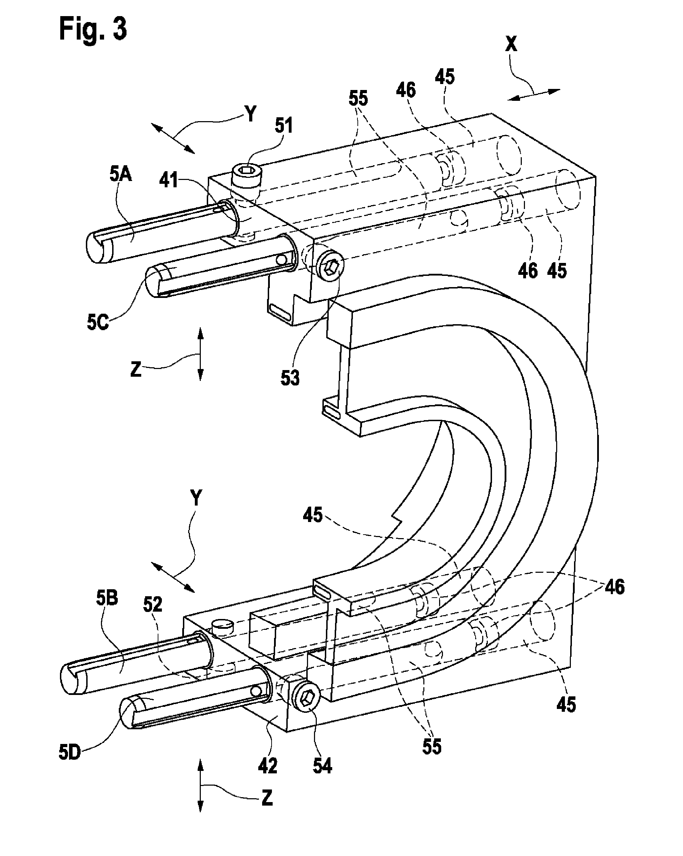

Die Schleusenvorrichtung 5 weist ferner ein erstes Exzenterelement 51 am ersten Führungselement 5A und ein drittes Exzenterelement 53 am dritten Führungselement 5C auf. Zudem ist ein hier nicht sichtbares zweites Exzenterelement 52 (vergl. Figur 3) am zweiten Führungselement 5B sowie ein viertes Exzenterelement 54 am vierten Führungselement 5D angeordnet.

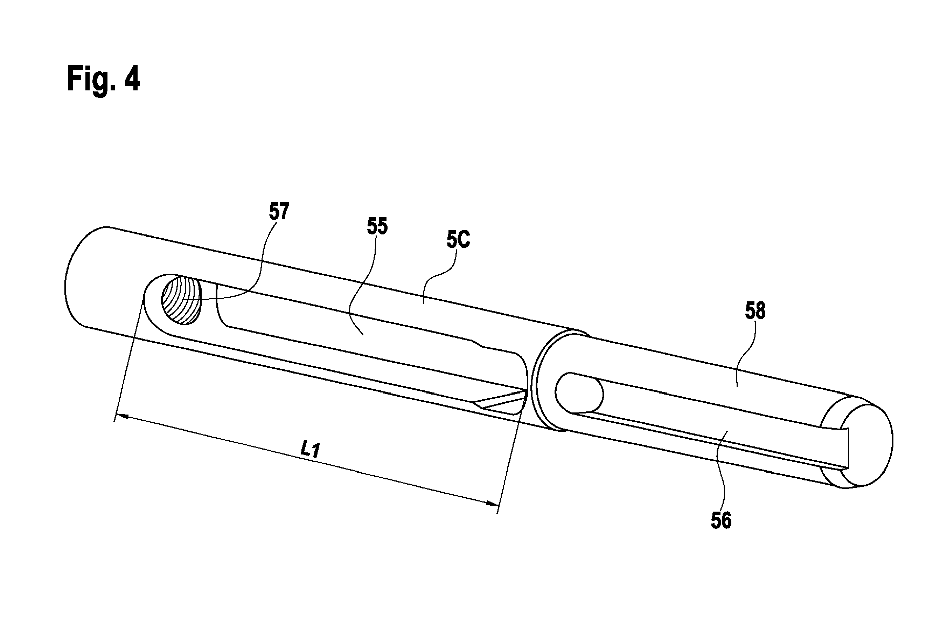

Die Führungselemente 5A, 5B, 5C, 5D sind am U-förmigen Kurvenabschnitt 40 mittels in Öffnungen 45 angeordneten Schrauben 46 fixiert, die in ein Gewinde 57 des jeweiligen Führungselements 5A, 5B, 5C, 5D eingeschraubt sind (Figur 3). Wie in Figur 4 veranschaulicht, die beispielhaft das Führungselement 5C zeigt, ist das dem Gewinde 57 gegenüberliegende Ende 58 der Führungselemente 5A, 5B, 5C, 5D zapfenförmig mit einer vertieften Abflachung 56 ausgebildet, die am Außenumfang in der gleichen Radialrichtung wie ein jeweiliges Langloch 55 angeordnet ist. Die Enden 58 der Führungselemente 5A, 5B, 5C, 5D werden an den angrenzenden Linearstreckenabschnitten 3, 3' mittels hier nicht dargestellten Schraubverbindungen form- bzw. kraftschlüssig fixiert.

Wie in Figur 3 dargestellt, weisen alle Führungselemente 5A, 5B, 5C, 5D ein senkrecht zur Längsrichtung der Führungselemente 5A, 5B, 5C, 5D durchgehendes Langloch 55 mit einer Länge L1 (vergl. Figur 4) auf, in welchem das jeweilige Exenterelement 51, 52, 53 bzw. 54 eingepasst ist. Mittels der vertikalen bzw. in einer Richtung angeordneten Exzenterelemente 51 und 52 kann der U-förmige Kurvenabschnitt 40 gegenüber den ersten und zweiten Linearstreckenteilen 3, 3' in der Richtung Y senkrecht zu einer Bewegungsrichtung B (siehe Figur 1) justiert werden. Die horizontalen bzw. in Richtung Y angeordneten Exzenterelemente 53 und 54 ermöglichen eine Justierung des U-förmigen Kurvenabschnitts 40 gegenüber den ersten und zweiten Linearstreckenteilen 3, 3' in einer durch einen Doppelpfeil gekennzeichneten Richtung Z quer zur Bewegungsrichtung B.

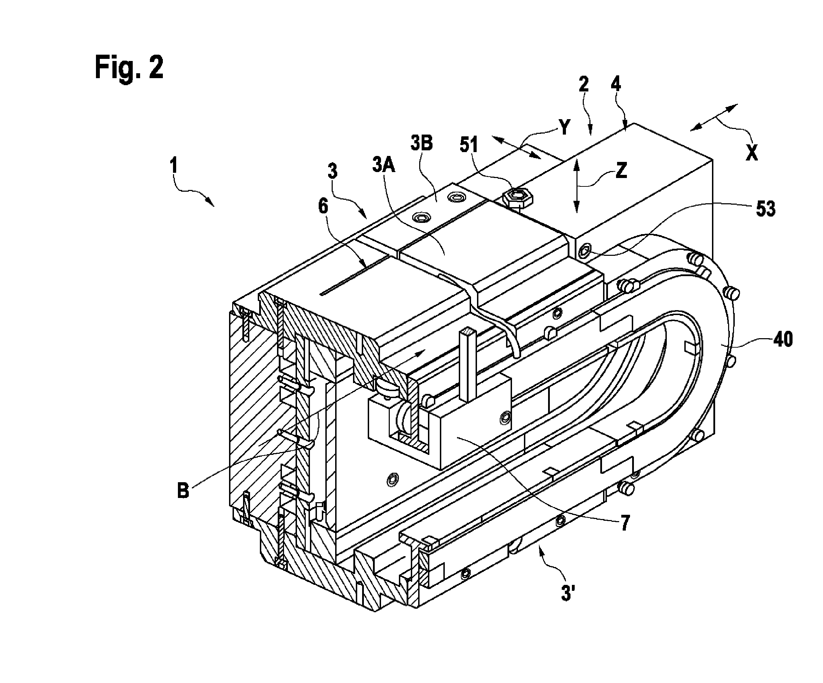

Wie aus Figur 1 weiter ersichtlich ist, weist das Linearstreckenteil 3 zudem einen parallel zur Bewegungsrichtung B ausgebildeten Trennschlitz 6 auf, der das Linearstreckenteil 3 in einen ersten Teil 3A und einen zweiten Teil 3B unterteilt, wobei der U-förmige Kurvenabschnitt 40 ausschließlich am ersten Teil 3A fixiert ist. Hierdurch ist das Linearstreckenteil 3 biegeweich ausgebildet und kann über das horizontale dritte Exzenterelement 53 relativ zum sehr formstabil ausgebildeten U-förmigen Kurvenabschnitt 40 des Kurvenstreckenteils 4 in Z-Richtung verbogen und justiert werden. Obwohl in Figur 1 nicht sichtbar, wird das zweite Linearstreckenteil 3' gleichermaßen durch einen Trennschlitz in einen ersten Teil und einen zweiten Teil unterteilt. Über das Exzentereiement 54 kann hierbei eine Feinjustierung relativ zum U-förmigen Kurvenabschnitt 40 in Z-Richtung erfolgen. Dadurch werden Übergänge der angrenzenden Streckenabschnitte exakt fluchtend bzw. bündig aneinander angeglichen, sodass ein betriebssicherer Lauf von verfahrbaren Läufern auf der Transportstrecke 2 gewährleistet ist, von denen in Figur 1 beispielhaft ein Läufer 7 dargestellt ist. Die Länge L1 des Langlochs 55 ist hierbei größer als eine Länge L des Läufers 7 bemessen. Dadurch kann nach Lösen der Schrauben 46 der U-förmige Kurvenabschnitt 40 längs den an den Linearstreckenteilen 3, 3' fixierten Führungselementen 5A, 5B, 5C, 5D in der Richtung X ausreichend weit, d. h. maximal mit der Länge L1, herausgezogen werden. Danach kann ein vorhandener Läufer 7 aus der Transportstrecke 2 ohne Kippen entnommen bzw. ein neuer darin eingesetzt werden. Danach werden durch Zurückschieben des U-förmigen Kurvenstreckenteils 4 die Führungselemente 5A, 5B, 5C, 5D wieder in die Bohrungen der Linearsteckenteile 3, 3' eingeschoben und mit diesen form- und kraftschlüssig verbunden. Der geschlossene Zustand des Transportsystems 1 ist in Figur 2 dargestellt.

Erfindungsgemäß ist es somit möglich, die Transportstrecke 2 zwischen dem U-förmigen Kurvenabschnitt 40 und den angrenzenden Streckenteilen des Transportsystems 1 mittels der Schleusenvorrichtung 5 mit geringem Zeitbedarf zu öffnen und zu schließen, um Läufer 7 aus- bzw. einzubauen. Hierbei ermöglicht die Schleusenvorrichtung 5 eine reproduzierbare Positionierung des Kurvenstreckenteils 4 relativ zu den Linearstreckenteilen 3, 3'. Somit müssen die Führungselemente 5A, 5B, 5C, 5D der Schleusenvorrichtung 5 nur einmalig justiert werden. Eine erneute manuelle Feinpositionierung der Streckenteile nach dem Schließen der Schleusenvorrichtung 5 ist nicht erforderlich.

## Patentansprüche

1. Transportsystem, umfassend:
- eine umlaufend geschlossene Transportstrecke (2) mit einer Vielzahl von Streckenteilen, wobei die Streckenteile Linearstreckenteile (3) und Kurvenstreckenteile (4) umfassen,
- wobei wenigstens eines der Kurvenstreckenteile (4) einen U-förmigen Kurvenabschnitt (40) aufweist, welcher eine 180°-Umlenkung definiert,
- wenigstens einen entlang der Transportstrecke (2) verfahrbaren Läufer (7), um Gegenstände zu transportieren,
**gekennzeichnet durch**
- eine Schleusenvorrichtung (5), welche zwischen dem U-förmigen Kurvenabschnitt (40) und benachbarten Streckenteilen angeordnet ist,
- wobei die Schleusenvorrichtung (5) wenigstens ein erstes stabförmiges Führungselement (5A) und ein zweites stabförmiges Führungselement (5B) umfasst,
- wobei das erste Führungselement (5A) ein erstes freies Ende (41) des U-förmigen Kurvenabschnitts (40) mit einem benachbarten Streckenteil verbindet und das zweite Führungselement (5B) ein zweites freies Ende (42) des U-förmigen Kurvenabschnitts (40) mit einem weiteren benachbarten Streckenteil verbindet, und
- wobei der U-förmige Kurvenabschnitt (40) zum Lösen von den benachbarten Streckenteilen über die stabförmigen Führungselemente (5A, 5B) teilweise abziehbar ausgebildet ist, um Läufer aus- oder einzuschleusen.

2. Transportsystem nach Anspruch 1, **dadurch gekennzeichnet, dass** die Schleusenvorrichtung (5) wenigstens ein Exzenterelement (51, 52) umfasst, um eine Relativposition zwischen dem U-förmigen Kurvenabschnitt (40) und benachbarten Streckenteilen zu verändern.

3. Transportsystem nach Anspruch 2, **dadurch gekennzeichnet, dass** ein erstes Exzenterelement (51) am ersten stabförmigen Führungselement (5A) und ein zweites Exzenterelement (52) am zweiten stabförmigen Führungselement (5B) angeordnet ist.

4. Transportsystem nach Anspruch 3, **dadurch gekennzeichnet, dass** an einem ersten freien Ende (41) des Kurvenabschnitts (40) das erste stabförmige Führungselement (5A) und ein drittes stabförmiges Führungselement (5C) angeordnet ist, wobei an jedem der stabförmigen Führungselemente (5A, 5C) ein Exzenterelement (51, 53) angeordnet ist, wobei die Exzenterelemente (51, 53) in zueinander senkrechten Richtungen (Y, Z) angeordnet sind.

5. Transportsystem nach Anspruch 3 oder 4, **dadurch gekennzeichnet, dass** das stabförmige Führungselement ein senkrecht zur Längsrichtung des Führungselements durchgehendes Langloch (55) aufweist, in welchem ein Exzenterelement (51, 52, 53, 54) angeordnet ist.

6. Transportsystem nach Anspruch 5, **dadurch gekennzeichnet, dass** das Langloch (55) eine Länge (L1) in Längsrichtung aufweist, welche größer als eine Länge (L) des Läufers (7) in Bewegungsrichtung (B) ist.

7. Transportsystem nach einem der Ansprüche 4 bis 6, ferner umfassend ein viertes stabförmiges Führungselement (5D), wobei das vierte stabförmige Führungselement (5D) und das zweite stabförmige Führungselement (5B) an einem zweiten freien Ende (42) des Kurvenabschnitts (40) angeordnet sind, wobei an jedem stabförmigen Führungselement (5B, 5D) ein Exzenterelement (52, 54) angeordnet ist, wobei die Exzenterelemente (52, 54) in zueinander senkrechten Richtungen (Y, Z) angeordnet sind.

8. Transportsystem nach einem der vorhergehenden Ansprüche, **dadurch gekennzeichnet, dass** in dem zum U-förmigen Kurvenabschnitt (40) benachbarten Streckenteil ein Trennschlitz (6) vorgesehen ist, welcher das benachbarte Streckenteil in einen ersten Teil (3A) und einen zweiten Teil (3B) unterteilt, wobei der U-förmige Kurvenabschnitt (40) ausschließlich am ersten Teil (3A) fixiert ist.

## Claims

1. Transporting system comprising:
- a transporting route (2) which is closed all the way around and has a multiplicity of route parts, wherein the route parts comprise linear-route parts (3) and curved-route parts (4),
- wherein at least one of the curved-route parts (4) has a U-shaped curved portion (40) which defines a 180° deflection,
- at least one runner (7), which can be displaced along the transporting route (2) in order to transport articles,
**characterized by**
- an isolation-lock device (5), which is arranged between the U-shaped curved portion (40) and adjacent route parts,
- wherein the isolation-lock device (5) comprises at least one first rod-like guide element (5A) and a second rod-like guide element (5B),
- wherein the first guide element (5A) connects a first free end (41) of the U-shaped curved portion (40) to an adjacent route part and the second guide element (5B) connects a second free end (42) of the U-shaped curved portion (40) to a further adjacent route part, and
- wherein the U-shaped curved portion (40) is designed for partial withdrawal via the rod-like guide elements (5A, 5B), for release from the adjacent route parts, in order for runners to be removed or introduced.

2. Transporting system according to Claim 1, **characterized in that** the isolation-lock device (5) comprises at least one eccentric element (51, 52), in order to alter a relative position between the U-shaped curved portion (40) and adjacent route parts.

3. Transporting system according to Claim 2, **characterized in that** a first eccentric element (51) is arranged on the first rod-like guide element (5A) and a second eccentric element (52) is arranged on the second rod-like guide element (5B).

4. Transporting system according to Claim 3, **characterized in that** the first rod-like guide element (5A) and a third rod-like guide element (5C) are arranged at a first free end (41) of the curved portion (40), wherein an eccentric element (51, 53) is arranged on each of the rod-like guide elements (5A, 5C), and the eccentric elements (51, 53) are arranged in mutually perpendicular directions (Y, Z).

5. Transporting system according to Claim 3 or 4, **characterized in that** the rod-like guide element has a slot (55) which passes through perpendicularly to the longitudinal direction of the guide element and in which an eccentric element (51, 52, 53, 54) is arranged.

6. Transporting system according to Claim 5, **characterized in that** the slot (55) has a length (L1) in the longitudinal direction which is greater than a length (L) of the runner (7) in the movement direction (B).

7. Transporting system according to one of Claims 4 to 6, further comprising a fourth rod-like guide element (5D), wherein the fourth rod-like guide element (5D) and the second rod-like guide element (5B) are arranged at a second free end (42) of the curved portion (40), wherein an eccentric element (52, 54) is arranged on each rod-like guide element (5B, 5D), and the eccentric elements (52, 54) are arranged in mutually perpendicular directions (Y, Z).

8. Transporting system according to one of the preceding claims, **characterized by** the provision, in the route part adjacent to the U-shaped curved portion (40), of a separating slit (6), which subdivides the adjacent route part into a first part (3A) and a second part (3B), wherein the U-shaped curved portion (40) is fixed exclusively on the first part (3A).

## Revendications

1. Système de transport, comprenant :
- une section de transport (2) en circuit fermé, comprenant une pluralité de parties de section, les parties de section comprenant des parties de section linéaires (3) et des parties de section courbes (4),
- au moins l'une des parties de section courbes (4) présentant une portion courbe en forme de U (40) qui définit un renvoi de 180°,
- au moins un curseur (7) déplaçable le long de la section de transport (2) pour transporter des objets,
**caractérisé par**
- un dispositif de sas (5) qui est disposé entre la portion courbe en forme de U (40) et des parties de section adjacentes,
- le dispositif de sas (5) comprenant au moins un premier élément de guidage en forme de barre (5A) et un deuxième élément de guidage en forme de barre (5B),
- le premier élément de guidage (5A) reliant une première extrémité libre (41) de la portion courbe en forme de U (40) à une partie de section adjacente et le deuxième élément de guidage (5B) reliant une deuxième extrémité libre (42) de la portion courbe en forme de U (40) à une partie de section adjacente supplémentaire, et
- la portion courbe en forme de U (40) étant réalisée de manière à pouvoir être partiellement retirée pour se détacher des parties de section adjacentes par le biais des éléments de guidage en forme de barre (5A, 5B), afin d'éjecter ou d'amener des curseurs.

2. Système de transport selon la revendication 1, **caractérisé en ce que** le dispositif de sas (5) comprend au moins un élément excentrique (51, 52), afin de modifier une position relative entre la portion courbe en forme de U (40) et des parties de section adjacentes.

3. Système de transport selon la revendication 2, **caractérisé en ce qu'**un premier élément excentrique (51) est disposé au niveau du premier élément de guidage en forme de barre (5A) et un deuxième élément excentrique (52) est disposé au niveau du deuxième élément de guidage en forme de barre (5B).

4. Système de transport selon la revendication 3, **caractérisé en ce que** le premier élément de guidage en forme de barre (5A) et un troisième élément de guidage en forme de barre (5C) sont disposés au niveau d'une première extrémité libre (41) de la portion courbe (40), un élément excentrique (51, 53) étant disposé au niveau de chacun des éléments de guidage en forme de barre (5A, 5C),
les éléments excentriques (51, 53) étant disposés dans des directions perpendiculaires l'une à l'autre (Y, Z).

5. Système de transport selon la revendication 3 ou 4, **caractérisé en ce que** l'élément de guidage en forme de barre présente un trou oblong (55) s'étendant perpendiculairement à la direction longitudinale de l'élément de guidage, dans lequel est disposé un élément excentrique (51, 52, 53, 54).

6. Système de transport selon la revendication 5, **caractérisé en ce que** le trou oblong (55) présente une longueur (L1) dans la direction longitudinale qui est supérieure à une longueur (L) du curseur (7) dans la direction de déplacement (B).

7. Système de transport selon l'une quelconque des revendications 4 à 6, comprenant en outre un quatrième élément de guidage en forme de barre (5D), le quatrième élément de guidage en forme de barre (5D) et le deuxième élément de guidage en forme de barre (5B) étant disposés au niveau d'une deuxième extrémité libre (42) de la portion courbe (40), un élément excentrique (52, 54) étant disposé au niveau de chaque élément de guidage en forme de barre (5B, 5D), les éléments excentriques (52, 54) étant disposés dans des directions perpendiculaires l'une à l'autre (Y, Z).

8. Système de transport selon l'une quelconque des revendications précédentes, **caractérisé en ce qu'**une fente de séparation (6) est prévue dans la partie de section adjacente à la portion courbe en forme de U (40), laquelle fente de séparation divise la partie de section adjacente en une première partie (3A) et une deuxième partie (3B), la portion courbe en forme de U (40) étant fixée exclusivement à la première partie (3A).
